# EUROPEAN PATENT APPLICATION

(11) **EP 3 316 645 A1**
(43) Date of publication of application: **02.05.2018**
(21) Application number: 15902016.3
(22) Date of filing: 27.08.2015
(51) Int. Cl.: H04W 72/12

(54) **SIGNAL PROCESSING METHOD AND RELATED DEVICE**

(71) Applicant: Huawei Technologies Co., Ltd., Longgang District Shenzhen, Guangdong 518129 (CN)
(72) Inventor: ZHANG, Peng, Shenzhen Guangdong 518129 (CN); ZHAO, Yueying, Shenzhen Guangdong 518129 (CN); TIE, Xiaolei, Shenzhen Guangdong 518129 (CN)
(74) Representative: Körber, Martin Hans
(86) International application number: PCT/CN2015/088236
(87) International publication number: WO 2017/031745

(57) **Abstract**

The present invention provides a signal processing method and a related device. The signal processing method includes: obtaining, in a first cell or sector by first user equipment (UE), indication information that is borne on a control channel by a base station, where the indication information is used to indicate a cell or sector of a service signal in the first cell or sector and/or a cell or sector of an interference signal in the first cell or sector; and determining, by the first UE according to the indication information, at least one of the following content: a cell or sector that sends the service signal; or whether an interference signal exists, where the first UE further determines a cell or sector that sends the interference signal if the interference signal exists. According to the present invention, UE is assisted in processing an interference signal from a cell/sector, thereby improving quality of a service signal that is received by the UE in an interference environment.

## Description

### TECHNICAL FIELD

The present invention relates to the field of communications, and in particular, to a signal processing method and a related device.

### BACKGROUND

On a conventional WCDMA (English: Wideband Code Division Multiple Access, Chinese: wideband code division multiple access) cellular network, a service is provided for UE (English: User Equipment, Chinese: user equipment) by using a cell or sector as a unit. The cell or sector herein refers to a specific coverage area. Each cell or sector is responsible for a specific coverage area. Resources in a cell or sector can ensure service quality for users in a specific coverage area. Each cell is identified by using a unique cell ID (English: Identifier, Chinese: identifier), and the cell ID corresponds to a set of scrambling codes. A cell may be divided into one or more sectors. If multiple sectors are obtained by means of division, these sectors are all affiliated with a cell ID of the cell.

In the prior art, when downlink scheduling is performed, that is, when downlink data is delivered to UE belonging to a cell/sector, scheduling information for the scheduled UE is carried on a control channel, so that the UE can correctly demodulate the data.

The scheduling information of the cell/sector is carried on the control channel. When the UE is interfered by a scrambling code that is from a neighboring cell and that is different from a scrambling code of the cell to which the UE belongs or interfered by a scrambling code that is from a neighboring sector and that is the same as a scrambling code of the cell to which the UE belongs, because the UE does not know about interference information of the neighboring cell/sector, a signal serving the cell/sector of the UE is affected by the interference information. Consequently, quality of the service signal received by the UE deteriorates and normal communication is affected.

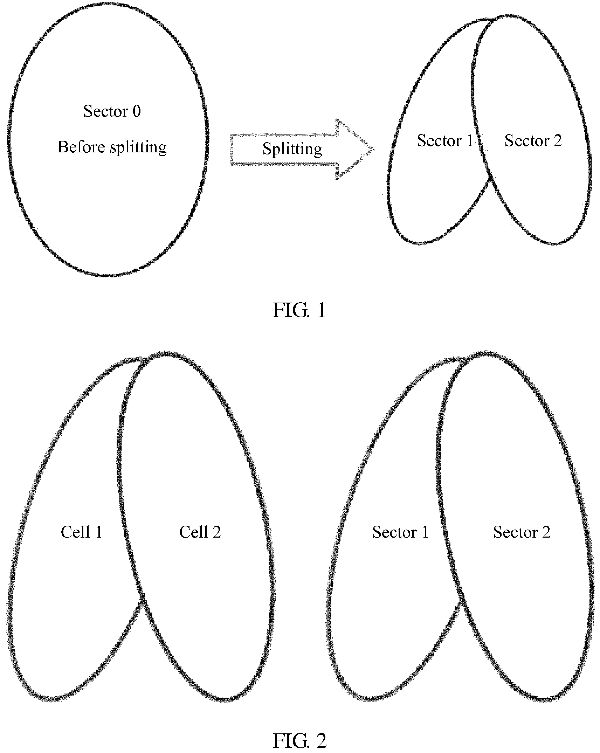

On a conventional WCDMA cellular network, one cell covers one sector, and resources in the cell can ensure service quality for users in the sector. When a quantity of users in the sector increases, the resources in the cell cannot ensure service quality in the sector. One method for improving service quality is cell splitting. That is, one original sector is split into multiple sectors, and services are respectively provided for these sectors by multiple cells. As shown in FIG. 1, after a cell is split, different scrambling codes are configured for sector 1 and sector 2 in FIG. 1. This increases scrambling code overheads, and inter-sector interference is caused by the different scrambling codes. Another method is co-cell. That is, one original sector is split into multiple sectors, and services are respectively provided for these sectors by multiple cells having a same scrambling code. After the co-cell technology is used, a same scrambling code is configured for sector 1 and sector 2 in FIG. 1, scrambling code overheads are the same as those of the sector before the splitting, and there is no inter-sector interference caused by different scrambling codes. However, there is interference caused by a signal from a neighboring sector having the same scrambling code.

### SUMMARY

The present invention provides a signal processing method and a related device, so as to assist UE in processing an interference signal from a cell/sector, thereby improving quality of a service signal that is received by the UE in an interference environment.

A first aspect of the present invention provides a signal processing method, including:
obtaining, in a first cell or sector by first user equipment (UE), indication information that is borne on a control channel by a base station, where the indication information is used to indicate a cell or sector of a service signal in the first cell or sector and/or a cell or sector of an interference signal in the first cell or sector; and
determining, by the first UE according to the indication information, at least one of the following content: a cell or sector that sends the service signal; or whether an interference signal exists, where the first UE further determines a cell or sector that sends the interference signal if the interference signal exists.

With reference to the first aspect of the present invention, in a first implementation of the first aspect of the present invention, the control channel includes a high speed shared control channel (HS-SCCH), and the method further includes:
when the interference signal exists, obtaining, by the first UE, scheduling information that is of the interference signal and that is sent by the base station, where the scheduling information includes at least one of the following five types of information: interference power information, interference modulation scheme information, interference transport block size information, interference redundancy and constellation version (RV) information, or scrambling code resource information; and
performing, by the first UE, interference cancellation processing on the interference signal according to the scheduling information of the interference signal.

With reference to the first aspect of the present invention, in a second implementation of the first aspect of the present invention, the control channel includes a high speed shared control channel (HS-SCCH), and the method further includes:
when the interference signal exists, obtaining, by the first UE, a user identifier of at least one other UE that is sent by the cell or sector of the interference signal, where the cell or sector of the interference signal provides a service signal for the at least one other UE;
obtaining, by the first UE by means of parsing according to a user identifier of second UE, a high speed shared control channel (HS-SCCH) providing a service for the second UE, and obtaining scheduling information of the interference signal from the HS-SCCH, where the second UE is one of the at least one other UE, the user identifier of the second UE is borne in a second part of the HS-SCCH, and the scheduling information includes at least one of the following five types of information: interference power information, interference modulation scheme information, interference transport block size information, interference redundancy and constellation version (RV) information, or scrambling code resource information; and
performing, by the first UE, interference cancellation processing on the interference signal according to the scheduling information of the interference signal.

With reference to the first implementation or the second implementation of the first aspect of the present invention, in a third implementation of the first aspect of the present invention,
the interference power information is carried in a transport block size information for the secondary transport block (TBSSB) field in the second part of the HS-SCCH, a transport block size information for the primary transport block (TBSPB) field in the second part of the HS-SCCH is used to indicate a size of a data block sent to the first UE, and the TBSSB field is used to indicate a magnitude of interference power in the interference power information;
the interference modulation scheme information and modulation information of the first UE are hybrid-coded and carried in a modulation scheme and number of transport blocks information MS field in a first part of the HS-SCCH;
the interference transport block size information is carried in the TBSSB field in the second part of the HS-SCCH;
the interference RV information is carried in a redundancy and constellation version for the secondary transport block (RVSB) field in the second part of the HS-SCCH; and
the scrambling code resource information is carried in an additional field in the first part of the HS-SCCH.

With reference to the first implementation or the second implementation of the first aspect of the present invention, in a fourth implementation of the first aspect of the present invention, the indication information is carried in a precoding weight information (PWIPB) field in the first part of the HS-SCCH.

With reference to the first implementation or the second implementation of the first aspect of the present invention, in a fifth implementation of the first aspect of the present invention, an indication area is set in a first part or the second part of the HS-SCCH, and the indication area is used to indicate the cell or sector of the service signal in the first cell or sector and/or the cell or sector of the interference signal in the first cell or sector.

A second aspect of the present invention provides a signal processing method, including:
bearing, by a base station, indication information on a control channel, where the indication information is used to indicate a cell or sector of a service signal in the first cell or sector and/or a cell or sector of an interference signal in the first cell or sector; and
sending, by the base station, the indication information to first user equipment (UE) in the first cell or sector, so that the first UE determines, according to the indication information, at least one of the following content: a cell or sector that sends the service signal; or whether an interference signal exists, where the first UE further determines a cell or sector that sends the interference signal if the interference signal exists.

With reference to the second aspect of the present invention, in a first implementation of the second aspect of the present invention, the control channel includes a high speed shared control channel (HS-SCCH), and the method further includes:
when the interference signal exists, sending, by the base station, scheduling information of the interference signal to the first UE, so that the first UE performs interference cancellation processing on the interference signal according to the scheduling information of the interference signal, where the scheduling information includes at least one of the following five types of information: interference power information, interference modulation scheme information, interference transport block size information, interference redundancy and constellation version (RV) information, or scrambling code resource information.

A third aspect of the present invention provides user equipment, including:
a first obtaining unit, configured to obtain, in a first cell or sector, indication information that is borne on a control channel by a base station, where the indication information is used to indicate a cell or sector of a service signal in the first cell or sector and/or a cell or sector of an interference signal in the first cell or sector; and
a determining unit, configured to determine, according to the indication information, at least one of the following content: a cell or sector that sends the service signal; or whether an interference signal exists, where the determining unit further determines a cell or sector that sends the interference signal if the interference signal exists.

With reference to the third aspect of the present invention, in a first implementation of the third aspect of the present invention, the control channel includes a high speed shared control channel (HS-SCCH), and the equipment further includes:
a second obtaining unit, configured to: when the interference signal exists, obtain scheduling information that is of the interference signal and that is sent by the base station, where the scheduling information includes at least one of the following five types of information: interference power information, interference modulation scheme information, interference transport block size information, interference redundancy and constellation version (RV) information, or scrambling code resource information; and
a first processing unit, configured to perform interference cancellation processing on the interference signal according to the scheduling information of the interference signal.

With reference to the third aspect of the present invention, in a second implementation of the third aspect of the present invention, the control channel includes a high speed shared control channel (HS-SCCH), and the equipment further includes:
a third obtaining unit, configured to: when the interference signal exists, obtain a user identifier of at least one other user equipment (UE) that is sent by the cell or sector of the interference signal, where the cell or sector of the interference signal provides a service signal for the at least one other UE;
a parsing unit, configured to: obtain, by means of parsing according to a user identifier of second UE, a high speed shared control channel (HS-SCCH) providing a service for the second UE, and obtain scheduling information of the interference signal from the HS-SCCH, where the second UE is one of the at least one other UE, the user identifier of the second UE is borne in a second part of the HS-SCCH, and the scheduling information includes at least one of the following five types of information: interference power information, interference modulation scheme information, interference transport block size information, interference redundancy and constellation version (RV) information, or scrambling code resource information; and
a second processing unit, configured to perform interference cancellation processing on the interference signal according to the scheduling information of the interference signal.

A fourth aspect of the present invention provides a base station, including:
a bearing unit, configured to bear indication information on a control channel, where the indication information is used to indicate a cell or sector of a service signal in the first cell or sector and/or a cell or sector of an interference signal in the first cell or sector; and
a first sending unit, configured to send the indication information to first user equipment (UE) in the first cell or sector, so that the first UE determines, according to the indication information, at least one of the following content: a cell or sector that sends the service signal; or whether an interference signal exists, where the first UE further determines a cell or sector that sends the interference signal if the interference signal exists.

With reference to the fourth aspect of the present invention, in a first implementation of the fourth aspect of the present invention, the control channel includes a high speed shared control channel (HS-SCCH), and the base station further includes:
a second sending unit, configured to: when the interference signal exists, send scheduling information of the interference signal to the first UE, so that the first UE performs interference cancellation processing on the interference signal according to the scheduling information of the interference signal, where the scheduling information includes at least one of the following five types of information: interference power information, interference modulation scheme information, interference transport block size information, interference redundancy and constellation version (RV) information, or scrambling code resource information.

A fifth aspect of the present invention provides user equipment, including: a receiver, a transmitter, a processor, and a memory, where the processor is configured to perform the following operations:
obtaining, in a first cell or sector, indication information that is borne on a control channel by a base station, where the indication information is used to indicate a cell or sector of a service signal in the first cell or sector and/or a cell or sector of an interference signal in the first cell or sector; and
determining, according to the indication information, at least one of the following content: a cell or sector that sends the service signal; or whether an interference signal exists, where the processor further determines a cell or sector that sends the interference signal if the interference signal exists.

With reference to the fifth aspect of the present invention, in a first implementation of the fifth aspect of the present invention, the control channel includes a high speed shared control channel (HS-SCCH), and the processor is further configured to perform the following operations:
when the interference signal exists, obtaining scheduling information that is of the interference signal and that is sent by the base station, where the scheduling information includes at least one of the following five types of information: interference power information, interference modulation scheme information, interference transport block size information, interference redundancy and constellation version (RV) information, or scrambling code resource information; and
performing interference cancellation processing on the interference signal according to the scheduling information of the interference signal.

With reference to the fifth aspect of the present invention, in a second implementation of the fifth aspect of the present invention, the control channel includes a high speed shared control channel (HS-SCCH), and the processor is further configured to perform the following operations:
when the interference signal exists, obtaining a user identifier of at least one other user equipment (UE) that is sent by the cell or sector of the interference signal, where the cell or sector of the interference signal provides a service signal for the at least one other UE;
obtaining, by means of parsing according to a user identifier of second UE, a high speed shared control channel (HS-SCCH) providing a service for the second UE, and obtaining scheduling information of the interference signal from the HS-SCCH, where the second UE is one of the at least one other UE, the user identifier of the second UE is borne in a second part of the HS-SCCH, and the scheduling information includes at least one of the following five types of information: interference power information, interference modulation scheme information, interference transport block size information, interference redundancy and constellation version (RV) information, or scrambling code resource information; and
performing interference cancellation processing on the interference signal according to the scheduling information of the interference signal.

A sixth aspect of the present invention provides a base station, including: a receiver, a transmitter, a processor, and a memory, where the processor is configured to perform the following operations:
bearing indication information on a control channel, where the indication information is used to indicate a cell or sector of a service signal in the first cell or sector and/or a cell or sector of an interference signal in the first cell or sector; and
sending the indication information to first user equipment (UE) in the first cell or sector, so that the first UE determines, according to the indication information, at least one of the following content: a cell or sector that sends the service signal; or whether an interference signal exists, where the processor further determines a cell or sector that sends the interference signal if the interference signal exists.

With reference to the sixth aspect of the present invention, in a first implementation of the sixth aspect of the present invention, the control channel includes a high speed shared control channel (HS-SCCH), and the processor is further configured to perform the following operations:
when the interference signal exists, sending scheduling information of the interference signal to the first UE, so that the first UE performs interference cancellation processing on the interference signal according to the scheduling information of the interference signal, where the scheduling information includes at least one of the following five types of information: interference power information, interference modulation scheme information, interference transport block size information, interference redundancy and constellation version (RV) information, or scrambling code resource information.

It can be learned from the foregoing technical solutions that the embodiments of the present invention have the following advantages: The first user equipment (UE) obtains, in the first cell or sector, the indication information that is borne on the control channel by the base station, and the first UE determines, according to the indication information, at least one of the following content: a cell or sector that sends the service signal; or whether an interference signal exists, where the first UE further determines a cell or sector that sends the interference signal if the interference signal exists. In this way, the first UE is assisted in processing the determined interference signal, thereby improving quality of the service signal that is received by the first UE in an interference environment.

### BRIEF DESCRIPTION OF DRAWINGS

FIG. 1 is a schematic diagram of sector splitting according to the present invention;
FIG. 2 is a schematic diagram of inter-cell interference and inter-sector interference according to the present invention;
FIG. 3 is a schematic flowchart of an embodiment of a signal processing method according to the present invention;
FIG. 4 is a schematic flowchart of another embodiment of a signal processing method according to the present invention;
FIG. 5 is a schematic flowchart of another embodiment of a signal processing method according to the present invention;
FIG. 6 is a schematic flowchart of another embodiment of a signal processing method according to the present invention;
FIG. 7 is a schematic flowchart of another embodiment of a signal processing method according to the present invention;
FIG. 8 is a schematic structural diagram of an embodiment of user equipment according to the present invention;
FIG. 9 is a schematic structural diagram of another embodiment of user equipment according to the present invention;
FIG. 10 is a schematic structural diagram of another embodiment of user equipment according to the present invention;
FIG. 11 is a schematic structural diagram of another embodiment of user equipment according to the present invention;
FIG. 12 is a schematic structural diagram of an embodiment of a base station according to the present invention;
FIG. 13 is a schematic structural diagram of another embodiment of a base station according to the present invention; and
FIG. 14 is a schematic structural diagram of another embodiment of a base station according to the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

It should be understood that, in the embodiments of the present invention, terms such as first and second may be used to describe users or terminals, but the users or terminals should not be limited to these terms. These terms are used only for distinguishing users or terminals. For example, without departing from the scope of the embodiments of the present invention, a first user may also be referred to as a second user. Similarly, a second user may also be referred to as a first user. Likewise, a second user may also be referred to as a third user. This is not limited in the embodiments of the present invention.

First, the technical problems to be resolved in the present invention, related network elements, and functions thereof are briefly described.
Sector (sector): A geographic area for distinguishing base station services according to a geographic position.
Cell (cell): A logical area for distinguishing base station services according to a scrambling code.
Co-cell technology: A completely same scrambling code is configured for at least two neighboring sectors, that is, multiple sectors belong to one cell.
ST mode: A mode in which different sectors in one cell transmit independent downlink signals.
OT mode: A mode in which all sectors in one cell transmit a same downlink signal.
NodeB: A base station responsible for providing communication services for UE. One base station is responsible for providing a service for UE in at least one sector/cell.
UE: User equipment responsible for receiving information delivered by a NodeB.

HS-SCCH (English: High Speed-Shared Control Channel, Chinese: high speed shared control channel): An HS-SCCH has multiple modes. Using a MIMO (English: Multiple Input Multiple Output, Chinese: Multiple Input Multiple Output) mode as an example, the HS-SCCH is divided into two parts: a first part part 1 and a second part part 2.

The following is carried in the first part part 1:
CCS (English: Channelization-code-set, Chinese: channelization-code-set information) field, in which channelization-code-set information of scheduled UE is carried.
MS (English: Modulation scheme and number of transport blocks information, Chinese: modulation scheme and number of transport blocks information) field, in which a modulation scheme and a quantity of transport blocks of scheduled UE are carried.
PWIPB (English: Precoding weight information, Chinese: precoding weight information) field, in which precoding information of scheduled UE is carried.

The following is carried in the second part part 2:
TBSPB (English: Transport block size information for the primary transport block, Chinese: transport-block size information for the primary transport block) field, in which transport block size information for the primary transport block of scheduled UE is carried.
TBSSB (English: Transport block size information for the secondary transport block, Chinese: transport-block size information for the secondary transport block) field, in which transport block size information for the secondary transport block of scheduled UE is carried.
HAP (English: Hybrid-ARQ process information, Chinese: hybrid-ARQ process information) field, in which hybrid-ARQ process information of scheduled UE is carried.
RVPB (English: Redundancy and constellation version for the primary transport block, Chinese: redundancy and constellation version for the primary transport block) field, in which information about redundancy and constellation version for the primary transport block is carried.
RVSB (English: Redundancy and constellation version for the secondary transport block, Chinese: redundancy and constellation version for the secondary transport block) field, in which information about redundancy and constellation version for the secondary transport block is carried.

The present invention may be applied to a scenario in which inter-cell interference on a conventional WCDMA network (that is, a service cell in which UE is located and a neighboring cell use different scrambling codes) is processed, and a scenario in which inter-sector interference in the co-cell technology (that is, a service cell in which UE is located and a neighboring cell use a same scrambling code) is processed.

Inter-cell interference is shown in FIG. 2. If UE receives data from cell 1, when the UE is in an edge area of cell 1 and cell 2, the UE may receive interference from cell 2. For inter-sector interference, similarly, if UE receives data from sector 1, when the UE is in an edge area of sector 1 and sector 2, the UE may receive interference from sector 2.

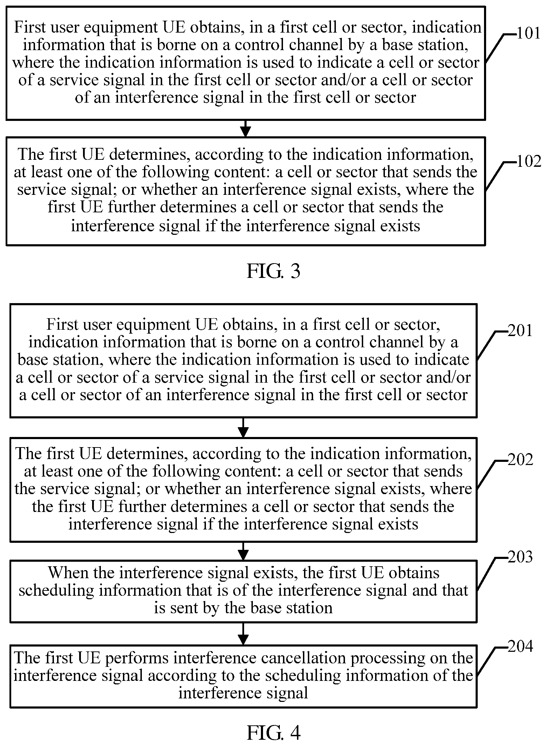

To assist UE in processing an interference signal from a cell/sector, an embodiment of the present invention provides a signal processing method that is mainly performed by user equipment. Referring to FIG. 3, FIG. 3 shows an embodiment of a signal processing method according to the present invention.
101: First user equipment (UE) obtains, in a first cell or sector, indication information that is borne on a control channel by a base station, where the indication information is used to indicate a cell or sector of a service signal in the first cell or sector and/or a cell or sector of an interference signal in the first cell or sector.

It should be noted that the first cell or sector is a cell or sector to which the first UE belongs. The indication information is used to indicate a cell or sector of a service signal in the first cell or sector and/or a cell or sector of an interference signal in the first cell or sector. For example, the indication information may be used to inform the first UE of a cell/sector (or a combination of sectors) that sends the service signal among signals in the first cell or sector to the first UE, and/or a cell/sector that sends the interference signal among the signals in the first cell or sector to the first UE.
102: The first UE determines, according to the indication information, at least one of the following content: a cell or sector that sends the service signal; or whether an interference signal exists, where the first UE further determines a cell or sector that sends the interference signal if the interference signal exists.

For example, when the indication information indicates that the first cell or sector sends the service signal among signals in the first cell or sector to the first UE, the first UE determines that the cell or sector that sends the service signal is the first cell or sector. When the indication information indicates that the signals in the first cell or sector include the service signal that is sent by the first cell/sector to the first UE and an interference signal that is sent by a second cell or sector and that interferes with the first UE, the first UE determines that the interference signal exists, and determines that a cell or sector that sends the interference signal is the second cell/sector.

In this embodiment of the present invention, the first user equipment (UE) obtains, in the first cell or sector, the indication information that is borne on the control channel by the base station, and the first UE determines, according to the indication information, at least one of the following content: a cell or sector that sends the service signal; or whether an interference signal exists, where the first UE further determines a cell or sector that sends the interference signal if the interference signal exists. In this way, the first UE is assisted in processing the determined interference signal, thereby improving quality of the service signal that is received by the first UE in an interference environment.

Further, after it is determined that the interference signal exists, the UE may process the interference signal. The control channel in the present invention may include: a high speed shared control channel (HS-SCCH), a primary common control physical channel (English: Primary Common Control Physical Channel, P-CCPCH in English for short), a secondary common control physical channel (English: Secondary Common Control Physical Channel, S-CCPCH in English for short), or a newly defined downlink control channel. A detailed description is provided in the following embodiment by using the HS-SCCH as an example.

Referring to FIG. 4, FIG. 4 shows another embodiment of a signal processing method according to the present invention.
201: First user equipment (UE) obtains, in a first cell or sector, indication information that is borne on a control channel by a base station, where the indication information is used to indicate a cell or sector of a service signal in the first cell or sector and/or a cell or sector of an interference signal in the first cell or sector.
202: The first UE determines, according to the indication information, at least one of the following content: a cell or sector that sends the service signal; or whether an interference signal exists, where the first UE further determines a cell or sector that sends the interference signal if the interference signal exists.

For steps 201 and 202, correspondingly refer to relevant descriptions of steps 101 and 102. Details are not described herein again.
203: When the interference signal exists, the first UE obtains scheduling information that is of the interference signal and that is sent by the base station.

It should be noted that the base station NodeB may obtain the scheduling information of the interference signal in advance, and send the scheduling information of the interference signal to the first UE. Alternatively, the first UE requests the base station for the scheduling information of the interference signal, and the base station may send the scheduling information of the interference signal to the first UE according to the requirement of the first UE. The scheduling information may include at least one of the following five types of information: interference power information, interference modulation scheme information, interference transport block size information, interference RV (English: Redundancy and constellation version, Chinese: redundancy and constellation version) information, or scrambling code resource information.
204: The first UE performs interference cancellation processing on the interference signal according to the scheduling information of the interference signal.

In this embodiment of the present invention, when the interference signal exists, the first UE obtains the scheduling information that is of the interference signal and that is sent by the base station, and performs interference cancellation processing on the interference signal according to the scheduling information of the interference signal. Therefore, after determining the cell or sector that sends the interference signal, the first UE can pertinently obtain the scheduling information that is of the interference signal and that is sent by the base station, and perform interference cancellation processing on the interference signal according to the scheduling information of the interference signal, thereby improving quality of the service signal that is received by the first UE in an interference environment.

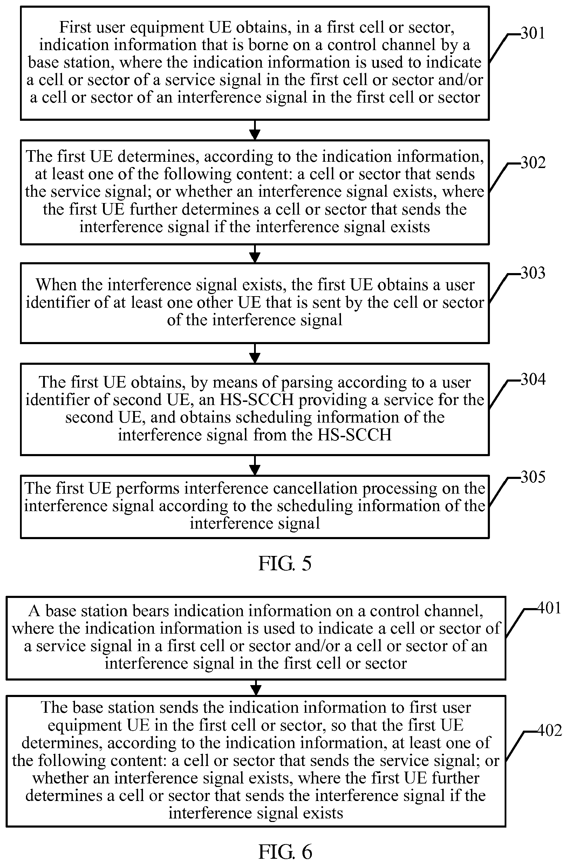

Referring to FIG. 5, FIG. 5 shows another embodiment of a signal processing method according to the present invention.
301: First user equipment (UE) obtains, in a first cell or sector, indication information that is borne on a control channel by a base station, where the indication information is used to indicate a cell or sector of a service signal in the first cell or sector and/or a cell or sector of an interference signal in the first cell or sector.
302: The first UE determines, according to the indication information, at least one of the following content: a cell or sector that sends the service signal; or whether an interference signal exists, where the first UE further determines a cell or sector that sends the interference signal if the interference signal exists.

For steps 301 and 302, correspondingly refer to relevant descriptions of steps 101 and 102. Details are not described herein again.
303: When the interference signal exists, the first UE obtains a user identifier of at least one other UE that is sent by the cell or sector of the interference signal.

It should be noted that the cell or sector of the interference signal provides a service signal for the at least one other UE.
304: The first UE obtains, by means of parsing according to a user identifier of second UE, an HS-SCCH providing a service for the second UE, and obtains scheduling information of the interference signal from the HS-SCCH.

It should be noted that the second UE is one of the at least one other UE, and the user identifier of the second UE is borne in a second part of the HS-SCCH. Specifically, bits of an RVSB field and a TBSSB field in the second part of the HS-SCCH may be used to identify the user identifier of the second UE. Alternatively, a new field is specially added to the second part of the HS-SCCH for identifying the user identifier of the second UE.

The scheduling information may include at least one of the following five types of information: interference power information, interference modulation scheme information, interference transport block size information, interference redundancy and constellation version (RV) information, or scrambling code resource information.
305: The first UE performs interference cancellation processing on the interference signal according to the scheduling information of the interference signal.

In this embodiment of the present invention, when the interference signal exists, the first UE obtains the user identifier of the at least one other UE that is sent by the cell or sector of the interference signal. The first UE obtains, by means of parsing according to the user identifier of the second UE, the HS-SCCH providing a service for the second UE, obtains the scheduling information of the interference signal from the HS-SCCH, and then performs interference cancellation processing on the interference signal according to the scheduling information of the interference signal. Therefore, after determining the cell or sector that sends the interference signal, the first UE obtains, by means of parsing according to the user identifier of the second UE, the HS-SCCH providing a service for the second UE, obtains the scheduling information of the interference signal from the HS-SCCH, and then performs interference cancellation processing on the interference signal according to the scheduling information of the interference signal, thereby improving quality of the service signal that is received by the first UE in an interference environment.

To assist UE in processing an interference signal from a cell/sector, an embodiment of the present invention provides a signal processing method that is mainly performed by a base station. Referring to FIG. 6, FIG. 6 shows another embodiment of a signal processing method according to the present invention.
401: A base station bears indication information on a control channel, where the indication information is used to indicate a cell or sector of a service signal in the first cell or sector and/or a cell or sector of an interference signal in the first cell or sector.
402: The base station sends the indication information to first user equipment (UE) in the first cell or sector, so that the first UE determines, according to the indication information, at least one of the following content: a cell or sector that sends the service signal; or whether an interference signal exists, where the first UE further determines a cell or sector that sends the interference signal if the interference signal exists.

For a relevant description, correspondingly refer to steps 101 and 102 in Embodiment 1. Details are not described herein again.

In this embodiment of the present invention, the base station bears the indication information on the control channel, and sends the indication information to the first user equipment (UE) in the first cell or sector, so that the first UE determines, according to the indication information, at least one of the following content: a cell or sector that sends the service signal; or whether an interference signal exists, where the first UE further determines a cell or sector that sends the interference signal if the interference signal exists. In this way, the first UE is assisted in processing the determined interference signal, thereby improving quality of the service signal that is received by the first UE in an interference environment.

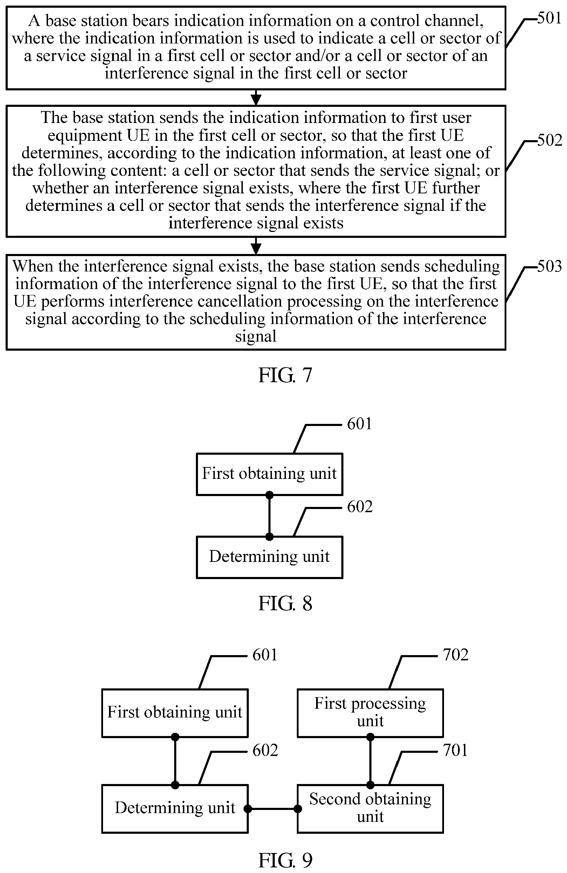

Referring to FIG. 7, FIG. 7 shows another embodiment of a signal processing method according to the present invention.
501: A base station bears indication information on a control channel, where the indication information is used to indicate a cell or sector of a service signal in the first cell or sector and/or a cell or sector of an interference signal in the first cell or sector.
502: The base station sends the indication information to first user equipment (UE) in the first cell or sector, so that the first UE determines, according to the indication information, at least one of the following content: a cell or sector that sends the service signal; or whether an interference signal exists, where the first UE further determines a cell or sector that sends the interference signal if the interference signal exists.
503: When the interference signal exists, the base station sends scheduling information of the interference signal to the first UE, so that the first UE performs interference cancellation processing on the interference signal according to the scheduling information of the interference signal.

The scheduling information includes at least one of the following five types of information: interference power information, interference modulation scheme information, interference transport block size information, interference redundancy and constellation version (RV) information, or scrambling code resource information.

For a relevant description, correspondingly refer to steps 201, 202, 203, and 204 in Embodiment 2. Details are not described herein again.

In this embodiment of the present invention, when the interference signal exists, the base station sends the scheduling information of the interference signal to the first UE, so that the first UE performs interference cancellation processing on the interference signal according to the scheduling information of the interference signal, thereby improving quality of the service signal that is received by the first UE in an interference environment.

Optionally, in an implementation, the interference power information is carried in a transport block size information for the secondary transport block (TBSSB) field in a second part of the HS-SCCH, a transport block size information for the primary transport block (TBSPB) field in the second part of the HS-SCCH is used to indicate a size of a data block sent to the first UE, and the TBSSB field is used to indicate a magnitude of interference power in the interference power information.

Specifically, a specific quantity of bits may be used for indication. For example, if only one bit is used, whether interference exists or not may be indicated. If two bits are used, four different interference power magnitudes may be indicated. Specifically, if MIMO information is not borne on the HS-SCCH, the interference power information may be placed in part 2 of the HS-SCCH, to re-interpret the TBSSB field of the HS-SCCH. In this way, the TBSPB field of the HS-SCCH is used to indicate a size of a data block sent to the first UE, and the TBSSB field is used to indicate a magnitude of interference power. Considering that a relatively large quantity of bits (for example, 6 bits) may be carried in the TBSSB field, the TBSSB field may be used to indicate a maximum of 2^6 = 64 different interference power magnitudes.

The interference modulation scheme information and modulation information of the first UE are hybrid-coded and carried in a modulation scheme and number of transport blocks information MS field in a first part of the HS-SCCH.

Specifically, a specific quantity of bits may be used for indication. For example, the interference modulation scheme information and modulation scheme information of the scheduled first UE are hybrid-coded and placed in the MS field in part 1 of the HS-SCCH. An example is shown in the following Table 1:

**Table 1**

| MS field bit value | Signal modulation scheme | Interference modulation scheme |
|---|---|---|
| 0, 0, 0 | QPSK | QPSK |
| 0, 0, 1 | QPSK | 16QAM |
| 0, 1, 0 | QPSK | 64QAM |
| 0, 1, 1 | 16QAM | QPSK |
| 1, 0, 0 | 16QAM | 16QAM |
| 1, 0, 1 | 16QAM | 64QAM |
| 1, 1, 0 | 64QAM | QPSK |
| 1, 1, 1 | 64QAM | 16QAM |

The interference transport block size information is carried in the TBSSB field in the second part of the HS-SCCH.

The interference RV information is carried in a redundancy and constellation version for the secondary transport block (RVSB) field in the second part of the HS-SCCH.

Specifically, a size of an interference transport block of a neighboring cell/sector of the first UE and interference RV may be represented by using a specific quantity of bits. In this way, after receiving the scheduling information, the first UE may perform interference cancellation processing that is based on a CRC (English: cyclic redundancy check, Chinese: cyclic redundancy check) check, on the neighboring cell/sector of the first UE. If MIMO information is not borne on the HS-SCCH, the interference transport block size information and the interference RV information may be respectively placed in the TBSSB field and the RVSB field in part 2 of the HS-SCCH.

The scrambling code resource information is carried in an additional field in the first part of the HS-SCCH.

Specifically, a specific quantity of bits may be used to indicate usage of a code resource in the neighboring cell/sector of the first UE. A new field may be specially set in part 1 of the HS-SCCH for bearing the information.

Optionally, in an implementation, a same scrambling code or different scrambling codes may be used for a signal sent to at least one other UE and a signal sent to the first UE. Specifically, different scrambling codes are used in a conventional-cell scenario, and a same scrambling code is used in a co-cell scenario.

Optionally, in an implementation, if the interference signal does not exist, the indication information is further used to indicate that there is no cell or sector of the interference signal in the first cell or sector.

Optionally, in an implementation, the indication information is carried in a precoding weight information (PWIPB) field in the first part of the HS-SCCH.

It should be noted that the PWIPB field is conventionally used to indicate precoding information of the first UE. However, in the application scenario of the present invention, the PWIPB field no longer indicates precoding information, but is used to indicate a cell/sector that sends the signal to the first UE. It is assumed that the PWIPB field includes two bits. In a co-cell configuration, the signal received by the first UE may come from two sectors. One explanation of the PWIPB field of the HS-SCCH may be as Table 2:

**Table 2**

| PWIPB value | Meaning |
|---|---|
| 1, 0 | The signal comes from sector 1 |
| 0, 1 | The signal comes from sector 2 |
| 1, 1 | The signal comes from sector 1 and sector 2 |

Optionally, in an implementation, an indication area is set in a first part or the second part of the HS-SCCH, and the indication area is used to indicate the cell or sector of the service signal in the first cell or sector and/or the cell or sector of the interference signal in the first cell or sector.

It should be noted that when interference exists, a new area may be set in part 1 or part 2 of the HS-SCCH as the indication area, to indicate that there is interference from a neighboring cell/sector of the first UE. An example is shown in the following Table 3:

**Table 3**

| New area | Meaning |
|---|---|
| 0, 0 | There is interference from a neighboring cell |
| 1, 0 | There is interference from neighboring cell 1 |
| 1, 1 | There is interference from neighboring cell 2 |

For ease of understanding, a cell selection method in this embodiment of the present invention is described by using a specific application scenario.

The present invention may be applied to a scenario in which inter-cell interference on a conventional WCDMA network (that is, a service cell in which UE is located and a neighboring cell use different scrambling codes) is processed, and a scenario in which inter-sector interference in the co-cell technology (that is, a service cell in which UE is located and a neighboring cell use a same scrambling code) is processed. The following describes the scenario in which inter-sector interference in the co-cell technology is processed.

UE 1 obtains, in a sector to which UE 1 belongs, indication information that is borne on a control channel by a base station. A high speed shared control channel (HS-SCCH) is used as an example for description in this scenario. The sector to which UE 1 belongs is sector 1. The indication information may be used to inform UE 1 of a sector (or a combination of sectors) that sends a service signal among signals in sector 1 to UE 1, and/or a sector that sends an interference signal among the signals to UE 1.

UE 1 may determine, according to the indication information, the sector that sends the service signal to UE 1 and the sector that sends the interference signal to UE 1.

After determining the sector from which the interference signal comes, for example, after determining that the interference signal comes from sector 2, UE 1 may further perform interference cancellation processing on the interference signal from sector 2. Refer to the following for specific manners:
Manner One: UE 1 may obtain scheduling information that is of the interference signal and that is sent by the base station, and perform interference cancellation processing on the interference signal according to the scheduling information of the interference signal. Specifically, the base station NodeB may obtain the scheduling information of the interference signal in advance, and send the scheduling information of the interference signal to UE 1. Alternatively, UE 1 requests the base station for the scheduling information of the interference signal, and the base station may send the scheduling information of the interference signal to UE 1 according to the requirement of UE 1. The scheduling information of the interference signal may include at least one of the following five types of information: interference power information, interference modulation scheme information, interference transport block size information, interference RV information, or scrambling code resource information.
Manner Two: UE 1 may obtain a user identifier of at least one other UE that is sent by sector 2. For example, UE 1 obtains a user identifier of UE 2 that is sent by sector 2. Sector 2 provides a service signal for UE 2. UE 1 may obtain, by means of parsing according to the user identifier of UE 2, an HS-SCCH that provides a service for UE 2, obtain scheduling information of the interference signal from the HS-SCCH, and then perform interference cancellation processing on the interference signal according to the scheduling information of the interference signal. The user identifier of UE 2 may be borne in a second part of the HS-SCCH. Specifically, bits of an RVSB field and a TBSSB field in the second part of the HS-SCCH may be used to identify the user identifier of UE 2. Alternatively, a new field is specially added to the second part of the HS-SCCH for identifying UE 2. The scheduling information of the interference signal may include at least one of the following five types of information: interference power information, interference modulation scheme information, interference transport block size information, interference RV information, or scrambling code resource information.

The scheduling information of the interference signal is separately borne in the fields of the HS-SCCH. Specifically, refer to the detailed description in this embodiment of the present invention. Details are not described herein again.

The foregoing describes the signal processing methods provided in the present invention. The following describes a structure of a related device for signal processing from the perspective of an apparatus. Referring to FIG. 8, FIG. 8 shows an embodiment of user equipment according to the present invention.

The user equipment includes: a first obtaining unit 601, configured to obtain, in a first cell or sector, indication information that is borne on a control channel by a base station, where the indication information is used to indicate a cell or sector of a service signal in the first cell or sector and/or a cell or sector of an interference signal in the first cell or sector; and a determining unit 602, configured to determine, according to the indication information, at least one of the following content: a cell or sector that sends the service signal; or whether an interference signal exists, where the determining unit further determines a cell or sector that sends the interference signal if the interference signal exists.

In this embodiment of the present invention, the first obtaining unit 601 obtains, in the first cell or sector, the indication information that is borne on the control channel by the base station, and the determining unit 602 determines, according to the indication information, at least one of the following content: a cell or sector that sends the service signal; or whether an interference signal exists, where the first UE further determines a cell or sector that sends the interference signal if the interference signal exists. In this way, the user equipment is assisted in processing the determined interference signal, thereby improving quality of the service signal that is received by the user equipment in an interference environment.

Based on the user equipment in the embodiment shown in FIG. 8, optionally, the control channel includes a high speed shared control channel (HS-SCCH). Referring to FIG. 9, in another implementation, the user equipment further includes: a second obtaining unit 701, configured to: when the interference signal exists, obtain scheduling information that is of the interference signal and that is sent by the base station, where the scheduling information includes at least one of the following five types of information: interference power information, interference modulation scheme information, interference transport block size information, interference redundancy and constellation version (RV) information, or scrambling code resource information; and a first processing unit 702, configured to perform interference cancellation processing on the interference signal according to the scheduling information of the interference signal.

In this embodiment of the present invention, when the interference signal exists, the second obtaining unit 701 obtains the scheduling information that is of the interference signal and that is sent by the base station, and the first processing unit 702 performs interference cancellation processing on the interference signal according to the scheduling information of the interference signal. Therefore, after determining the cell or sector that sends the interference signal, the user equipment can pertinently obtain the scheduling information that is of the interference signal and that is sent by the base station, and perform interference cancellation processing on the interference signal according to the scheduling information of the interference signal, thereby improving quality of the service signal that is received by the user equipment in an interference environment.

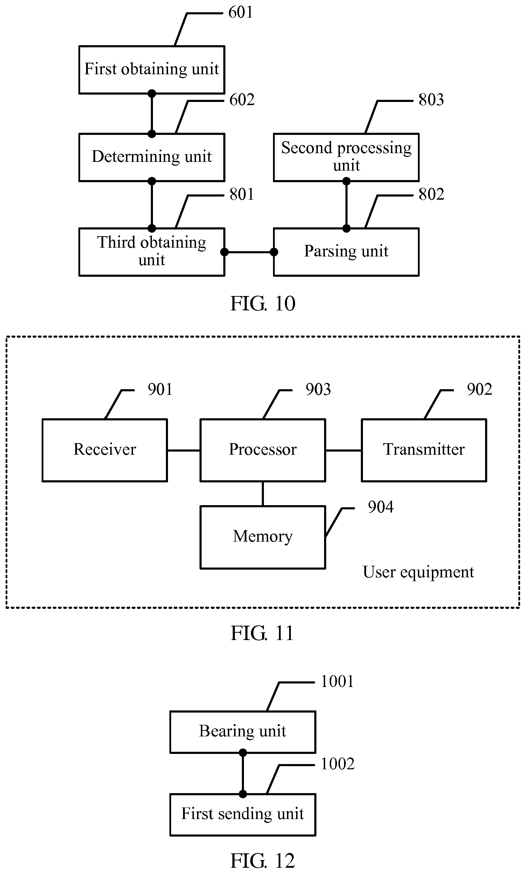

Based on the user equipment in the embodiment shown in FIG. 8, optionally, the control channel includes a high speed shared control channel (HS-SCCH). Referring to FIG. 10, in another implementation, the user equipment further includes:
a third obtaining unit 801, configured to: when the interference signal exists, obtain a user identifier of at least one other user equipment (UE) that is sent by the cell or sector of the interference signal, where the cell or sector of the interference signal provides a service signal for the at least one other UE;
a parsing unit 802, configured to obtain, by means of parsing according to a user identifier of second UE, an HS-SCCH providing a service for the second UE, and obtain scheduling information of the interference signal from the HS-SCCH, where the second UE is one of the at least one other UE, the user identifier of the second UE is borne in a second part of the HS-SCCH, and the scheduling information includes at least one of the following five types of information: interference power information, interference modulation scheme information, interference transport block size information, interference redundancy and constellation version (RV) information, or scrambling code resource information; and
a second processing unit 803, configured to perform interference cancellation processing on the interference signal according to the scheduling information of the interference signal.

In this embodiment of the present invention, when the interference signal exists, the third obtaining unit 801 obtains the user identifier of the at least one other user equipment (UE) that is sent by the cell or sector of the interference signal. The parsing unit 802 obtains, by means of parsing according to the user identifier of the second UE, the HS-SCCH providing a service for the second UE, and obtains the scheduling information of the interference signal from the HS-SCCH. The second processing unit 803 performs interference cancellation processing on the interference signal according to the scheduling information of the interference signal. Therefore, after determining the cell or sector that sends the interference signal, the user equipment obtains, by means of parsing according to the user identifier of the second UE, the HS-SCCH providing a service for the second UE, obtains the scheduling information of the interference signal from the HS-SCCH, and then performs interference cancellation processing on the interference signal according to the scheduling information of the interference signal, thereby improving quality of the service signal that is received by the user equipment in an interference environment.

The embodiments shown in FIG. 8 and FIG. 10 describe the specific structure of the user equipment from the perspective of functional units. The following describes a specific structure of user equipment from the perspective of hardware with reference to an embodiment shown in FIG. 11.

Referring to FIG. 11, the user equipment includes: a receiver 901, a transmitter 902, a processor 903, and a memory 904. The memory 904 may include a read-only memory and a random access memory, and provide an instructions and data for the processor 903. A part of the memory 904 may further include a non-volatile random access memory.

The memory 904 stores the following elements, executable modules or data structures, or a subset thereof, or an extended set thereof: operation instructions, including various operation instructions and used to implement various operations; and an operating system, including various system programs and used to implement various basic services and process a task based on hardware.

The user equipment in this embodiment of the present invention may include more or fewer components than those shown in FIG. 11, or two or more components may be combined, or a different component deployment or setting may be used; and the components may be implemented in hardware, software, or a combination of hardware and software that includes one or more signal processing and/or application-specific integrated circuits.

The processor 903 is configured to read the instructions stored in the memory 904, to perform the following operations: obtaining, in a first cell or sector, indication information that is borne on a control channel by a base station, where the indication information is used to indicate a cell or sector of a service signal in the first cell or sector and/or a cell or sector of an interference signal in the first cell or sector; and determining, according to the indication information, at least one of the following content: a cell or sector that sends the service signal; or whether an interference signal exists, where the first UE further determines a cell or sector that sends the interference signal if the interference signal exists.

In this embodiment of the present invention, the processor 903 obtains, in the first cell or sector, the indication information that is borne on the control channel by the base station, and determines, according to the indication information, at least one of the following content: a cell or sector that sends the service signal; or whether an interference signal exists, where the processor 903 further determines a cell or sector that sends the interference signal if the interference signal exists. In this way, the user equipment is assisted in processing the determined interference signal, thereby improving quality of the service signal that is received by the user equipment in an interference environment.

Optionally, the control channel includes a high speed shared control channel (HS-SCCH), and the processor 903 is further configured to perform the following operations: when the interference signal exists, obtaining scheduling information that is of the interference signal and that is sent by the base station, where the scheduling information includes at least one of the following five types of information: interference power information, interference modulation scheme information, interference transport block size information, interference redundancy and constellation version (RV) information, or scrambling code resource information; and performing interference cancellation processing on the interference signal according to the scheduling information of the interference signal.

Optionally, the control channel includes a high speed shared control channel (HS-SCCH), and the processor 903 is further configured to perform the following operations: when the interference signal exists, obtaining a user identifier of at least one other user equipment (UE) that is sent by the cell or sector of the interference signal, where the cell or sector of the interference signal provides a service signal for the at least one other UE; obtaining, by means of parsing according to a user identifier of second UE, an HS-SCCH providing a service for the second UE, and obtaining scheduling information of the interference signal from the HS-SCCH, where the second UE is one of the at least one other UE, the user identifier of the second UE is borne in a second part of the HS-SCCH, and the scheduling information includes at least one of the following five types of information: interference power information, interference modulation scheme information, interference transport block size information, interference redundancy and constellation version (RV) information, or scrambling code resource information; and performing interference cancellation processing on the interference signal according to the scheduling information of the interference signal.

Referring to FIG. 12, FIG. 12 shows an embodiment of a base station according to the present invention.

The base station includes: a bearing unit 1001, configured to bear indication information on a control channel, where the indication information is used to indicate a cell or sector of a service signal in the first cell or sector and/or a cell or sector of an interference signal in the first cell or sector; and a first sending unit 1002, configured to send the indication information to first user equipment (UE) in the first cell or sector, so that the first UE determines, according to the indication information, at least one of the following content: a cell or sector that sends the service signal; or whether an interference signal exists, where the first UE further determines a cell or sector that sends the interference signal if the interference signal exists.

In this embodiment of the present invention, the bearing unit 1001 bears the indication information on the control channel, and the first sending unit 1002 sends the indication information to the first user equipment (UE) in the first cell or sector, so that the first UE determines, according to the indication information, at least one of the following content: a cell or sector that sends the service signal; or whether an interference signal exists, where the first UE further determines a cell or sector that sends the interference signal if the interference signal exists. In this way, the first UE is assisted in processing the determined interference signal, thereby improving quality of the service signal that is received by the first UE in an interference environment.

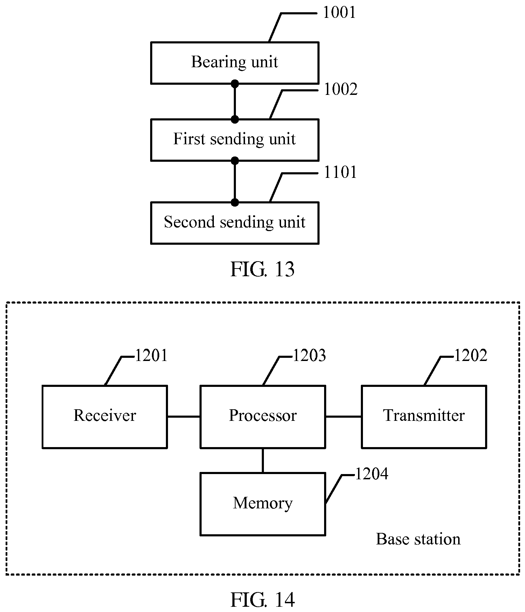

Based on the base station in the embodiment shown in FIG. 12, optionally, the control channel includes a high speed shared control channel (HS-SCCH). Referring to FIG. 13, in another implementation, the base station further includes: a second sending unit 1101, configured to: when the interference signal exists, send scheduling information of the interference signal to the first UE, so that the first UE performs interference cancellation processing on the interference signal according to the scheduling information of the interference signal, where the scheduling information includes at least one of the following five types of information: interference power information, interference modulation scheme information, interference transport block size information, interference redundancy and constellation version (RV) information, or scrambling code resource information.

In this embodiment of the present invention, when the interference signal exists, the second sending unit 1101 sends the scheduling information of the interference signal to the first UE, so that the first UE performs interference cancellation processing on the interference signal according to the scheduling information of the interference signal, thereby improving quality of the service signal that is received by the first UE in an interference environment.

The embodiments shown in FIG. 12 and FIG. 13 describe the specific structure of the base station from the perspective of functional units. The following describes a specific structure of a base station from the perspective of hardware with reference to an embodiment shown in FIG. 14.

Referring to FIG. 14, the base station includes: a receiver 1201, a transmitter 1202, a processor 1203, and a memory 1204. The memory 1204 may include a read-only memory and a random access memory, and provide an instruction and data for the processor 1203. A part of the memory 1204 may further include a non-volatile random access memory.

The memory 1204 stores the following elements, executable modules or data structures, or a subset thereof, or an extended set thereof: operation instructions, including various operation instructions and used to implement various operations; and an operating system, including various system programs and used to implement various basic services and process a task based on hardware.

The user equipment in this embodiment of the present invention may include more or fewer components than those shown in FIG. 14, or two or more components may be combined, or a different component deployment or setting may be used; and the components may be implemented in hardware, software, or a combination of hardware and software that includes one or more signal processing and/or application-specific integrated circuits.

The processor 1203 is configured to read the instructions stored in the memory 1204, to perform the following operations: bearing indication information on a control channel, where the indication information is used to indicate a cell or sector of a service signal in the first cell or sector and/or a cell or sector of an interference signal in the first cell or sector; and sending the indication information to first user equipment (UE) in the first cell or sector, so that the first UE determines, according to the indication information, at least one of the following content: a cell or sector that sends the service signal; or whether an interference signal exists, where the first UE further determines a cell or sector that sends the interference signal if the interference signal exists.

In this embodiment of the present invention, the processor 1203 bears the indication information on the control channel, and sends the indication information to the first user equipment (UE) in the first cell or sector, so that the first UE determines, according to the indication information, at least one of the following content: a cell or sector that sends the service signal; or whether an interference signal exists, where the first UE further determines a cell or sector that sends the interference signal if the interference signal exists. In this way, the first UE is assisted in processing the determined interference signal, thereby improving quality of the service signal that is received by the first UE in an interference environment.

Optionally, the control channel includes a high speed shared control channel (HS-SCCH), and the processor is further configured to perform the following operations: when the interference signal exists, sending scheduling information of the interference signal to the first UE, so that the first UE performs interference cancellation processing on the interference signal according to the scheduling information of the interference signal, where the scheduling information includes at least one of the following five types of information: interference power information, interference modulation scheme information, interference transport block size information, interference redundancy and constellation version (RV) information, or scrambling code resource information.

For a relevant description of the apparatus, correspondingly refer to relevant descriptions and effects of the method embodiments for understanding. Details are not described herein.

It may be clearly understood by a person skilled in the art that, for the purpose of convenient and brief description, for a detailed working process of the foregoing system, apparatus, and unit, reference may be made to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of the present invention, but not for limiting the present invention. Although the present invention is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of the embodiments of the present invention.

## Claims

1. A signal processing method, comprising:
obtaining, in a first cell or sector by first user equipment (UE), indication information that is borne on a control channel by a base station, wherein the indication information is used to indicate a cell or sector of a service signal in the first cell or sector and/or a cell or sector of an interference signal in the first cell or sector; and
determining, by the first UE according to the indication information, at least one of the following content: a cell or sector that sends the service signal; or whether an interference signal exists, wherein the first UE further determines a cell or sector that sends the interference signal if the interference signal exists.

2. The method according to claim 1, wherein the control channel comprises a high speed shared control channel (HS-SCCH), and the method further comprises:
when the interference signal exists, obtaining, by the first UE, scheduling information that is of the interference signal and that is sent by the base station, wherein the scheduling information comprises at least one of the following five types of information: interference power information, interference modulation scheme information, interference transport block size information, interference redundancy and constellation version (RV) information, or scrambling code resource information; and
performing, by the first UE, interference cancellation processing on the interference signal according to the scheduling information of the interference signal.

3. The method according to claim 1, wherein the control channel comprises a high speed shared control channel (HS-SCCH), and the method further comprises:
when the interference signal exists, obtaining, by the first UE, a user identifier of at least one other UE that is sent by the cell or sector of the interference signal, wherein the cell or sector of the interference signal provides a service signal for the at least one other UE;
obtaining, by the first UE by means of parsing according to a user identifier of second UE, a high speed shared control channel (HS-SCCH) providing a service for the second UE, and obtaining scheduling information of the interference signal from the HS-SCCH, wherein the second UE is one of the at least one other UE, the user identifier of the second UE is borne in a second part of the HS-SCCH, and the scheduling information comprises at least one of the following five types of information: interference power information, interference modulation scheme information, interference transport block size information, interference redundancy and constellation version (RV) information, or scrambling code resource information; and
performing, by the first UE, interference cancellation processing on the interference signal according to the scheduling information of the interference signal.

4. The method according to claim 2 or 3, wherein
the interference power information is carried in a transport block size information for a secondary transport block (TBSSB) field in the second part of the HS-SCCH, a transport block size information for the primary transport block (TBSPB) field in the second part of the HS-SCCH is used to indicate a size of a data block sent to the first UE, and the TBSSB field is used to indicate a magnitude of interference power in the interference power information;
the interference modulation scheme information and modulation information of the first UE are hybrid-coded and carried in a modulation scheme and number of transport blocks information MS field in a first part of the HS-SCCH;
the interference transport block size information is carried in the TBSSB field in the second part of the HS-SCCH;
the interference RV information is carried in a redundancy and constellation version for the secondary transport block (RVSB) field in the second part of the HS-SCCH; and
the scrambling code resource information is carried in an additional field in the first part of the HS-SCCH.

5. The method according to claim 2 or 3, wherein the indication information is carried in a precoding weight information (PWIPB) field in the first part of the HS-SCCH.

6. The method according to claim 2 or 3, wherein an indication area is set in a first part or the second part of the HS-SCCH, and the indication area is used to indicate the cell or sector of the service signal in the first cell or sector and/or the cell or sector of the interference signal in the first cell or sector.

7. A signal processing method, comprising:
bearing, by a base station, indication information on a control channel, wherein the indication information is used to indicate a cell or sector of a service signal in the first cell or sector and/or a cell or sector of an interference signal in the first cell or sector; and
sending, by the base station, the indication information to first user equipment (UE) in the first cell or sector, so that the first UE determines, according to the indication information, at least one of the following content: a cell or sector that sends the service signal; or whether an interference signal exists, wherein the first UE further determines a cell or sector that sends the interference signal if the interference signal exists.

8. The method according to claim 7, wherein the control channel comprises a high speed shared control channel (HS-SCCH), and the method further comprises:
when the interference signal exists, sending, by the base station, scheduling information of the interference signal to the first UE, so that the first UE performs interference cancellation processing on the interference signal according to the scheduling information of the interference signal, wherein the scheduling information comprises at least one of the following five types of information: interference power information, interference modulation scheme information, interference transport block size information, interference redundancy and constellation version (RV) information, or scrambling code resource information.

9. User equipment, comprising:
a first obtaining unit, configured to obtain, in a first cell or sector, indication information that is borne on a control channel by a base station, wherein the indication information is used to indicate a cell or sector of a service signal in the first cell or sector and/or a cell or sector of an interference signal in the first cell or sector; and
a determining unit, configured to determine, according to the indication information, at least one of the following content: a cell or sector that sends the service signal; or whether an interference signal exists, wherein the determining unit further determines a cell or sector that sends the interference signal if the interference signal exists.

10. The user equipment according to claim 9, wherein the control channel comprises a high speed shared control channel (HS-SCCH), and the equipment further comprises:
a second obtaining unit, configured to: when the interference signal exists, obtain scheduling information that is of the interference signal and that is sent by the base station, wherein the scheduling information comprises at least one of the following five types of information: interference power information, interference modulation scheme information, interference transport block size information, interference redundancy and constellation version (RV) information, or scrambling code resource information; and
a first processing unit, configured to perform interference cancellation processing on the interference signal according to the scheduling information of the interference signal.

11. The user equipment according to claim 9, wherein the control channel comprises a high speed shared control channel (HS-SCCH), and the equipment further comprises:
a third obtaining unit, configured to: when the interference signal exists, obtain a user identifier of at least one other user equipment (UE) that is sent by the cell or sector of the interference signal, wherein the cell or sector of the interference signal provides a service signal for the at least one other UE;
a parsing unit, configured to: obtain, by means of parsing according to a user identifier of second UE, a high speed shared control channel (HS-SCCH) providing a service for the second UE, and obtain scheduling information of the interference signal from the HS-SCCH, wherein the second UE is one of the at least one other UE, the user identifier of the second UE is borne in a second part of the HS-SCCH, and the scheduling information comprises at least one of the following five types of information: interference power information, interference modulation scheme information, interference transport block size information, interference redundancy and constellation version (RV) information, or scrambling code resource information; and
a second processing unit, configured to perform interference cancellation processing on the interference signal according to the scheduling information of the interference signal.

12. Abase station, comprising:
a bearing unit, configured to bear indication information on a control channel, wherein the indication information is used to indicate a cell or sector of a service signal in the first cell or sector and/or a cell or sector of an interference signal in the first cell or sector; and
a first sending unit, configured to send the indication information to first user equipment (UE) in the first cell or sector, so that the first UE determines, according to the indication information, at least one of the following content: a cell or sector that sends the service signal; or whether an interference signal exists, wherein the first UE further determines a cell or sector that sends the interference signal if the interference signal exists.

13. The base station according to claim 12, wherein the control channel comprises a high speed shared control channel (HS-SCCH), and the base station further comprises:
a second sending unit, configured to: when the interference signal exists, send scheduling information of the interference signal to the first UE, so that the first UE performs interference cancellation processing on the interference signal according to the scheduling information of the interference signal, wherein the scheduling information comprises at least one of the following five types of information: interference power information, interference modulation scheme information, interference transport block size information, interference redundancy and constellation version (RV) information, or scrambling code resource information.

14. User equipment, comprising: a receiver, a transmitter, a processor, and a memory, wherein the processor is configured to perform the following operations:
obtaining, in a first cell or sector, indication information that is borne on a control channel by a base station, wherein the indication information is used to indicate a cell or sector of a service signal in the first cell or sector and/or a cell or sector of an interference signal in the first cell or sector; and
determining, according to the indication information, at least one of the following content: a cell or sector that sends the service signal; or whether an interference signal exists, wherein the processor further determines a cell or sector that sends the interference signal if the interference signal exists.

15. The user equipment according to claim 14, wherein the control channel comprises a high speed shared control channel (HS-SCCH), and the processor is further configured to perform the following operations:
when the interference signal exists, obtaining scheduling information that is of the interference signal and that is sent by the base station, wherein the scheduling information comprises at least one of the following five types of information: interference power information, interference modulation scheme information, interference transport block size information, interference redundancy and constellation version (RV) information, or scrambling code resource information; and
performing interference cancellation processing on the interference signal according to the scheduling information of the interference signal.

16. The user equipment according to claim 14, wherein the control channel comprises a high speed shared control channel (HS-SCCH), and the processor is further configured to perform the following operations:
when the interference signal exists, obtaining a user identifier of at least one other user equipment (UE) that is sent by the cell or sector of the interference signal, wherein the cell or sector of the interference signal provides a service signal for the at least one other UE;
obtaining, by means of parsing according to a user identifier of second UE, a high speed shared control channel (HS-SCCH) providing a service for the second UE, and obtaining scheduling information of the interference signal from the HS-SCCH, wherein the second UE is one of the at least one other UE, the user identifier of the second UE is borne in a second part of the HS-SCCH, and the scheduling information comprises at least one of the following five types of information: interference power information, interference modulation scheme information, interference transport block size information, interference redundancy and constellation version (RV) information, or scrambling code resource information; and
performing interference cancellation processing on the interference signal according to the scheduling information of the interference signal.

17. A base station, comprising: a receiver, a transmitter, a processor, and a memory, wherein the processor is configured to perform the following operations:
bearing indication information on a control channel, wherein the indication information is used to indicate a cell or sector of a service signal in the first cell or sector and/or a cell or sector of an interference signal in the first cell or sector; and
sending the indication information to first user equipment (UE) in the first cell or sector, so that the first UE determines, according to the indication information, at least one of the following content: a cell or sector that sends the service signal; or whether an interference signal exists, wherein the processor further determines a cell or sector that sends the interference signal if the interference signal exists.

18. The base station according to claim 17, wherein the control channel comprises a high speed shared control channel (HS-SCCH), and the processor is further configured to perform the following operations:
when the interference signal exists, sending scheduling information of the interference signal to the first UE, so that the first UE performs interference cancellation processing on the interference signal according to the scheduling information of the interference signal, wherein the scheduling information comprises at least one of the following five types of information: interference power information, interference modulation scheme information, interference transport block size information, interference redundancy and constellation version (RV) information, or scrambling code resource information.
